# EUROPÄISCHE PATENTANMELDUNG

(11) **EP 0 770 771 A1**
(43) Veröffentlichungstag der Anmeldung: **02.05.1997**
(21) Anmeldenummer: 96810685.6
(22) Anmeldetag: 11.10.1996
(51) Int. Cl.: F02C 7/143, F04D 29/58

(54) **Zwischengekühlter Verdichter**

(30) Priorität: 26.10.1995 DE 19539774
(71) Anmelder: ASEA BROWN BOVERI AG, 5401 Baden (CH)
(72) Erfinder: Nielsen, Henrik, 5430 Wettingen (CH)
(74) Vertreter: Klein, Ernest

(57) **Zusammenfassung**

Eine offene Gasturbine mit Abwärmerückgewinn sowie Zwischenkühlung während der Verdichtung besteht im wesentlichen aus einem axialdurchströmten, zweiteiligen Verdichter (1A, 1B) mit dazwischengeschaltenen Kühler (5), einer Brennkammer (7, 8), einer Turbine (2A, 2B) und einem Rekuperator (6). Der erste Verdichterteil (1A) ist mit einer Mehrzahl von Wassereinspritzungen (12) versehen ist. Der Kühler (5) weist Mittel (13) zur Wasserrekuperation auf, welche über eine Förderpumpe (14) mit den Wassereinspritzungen (12) verbunden sind.

## Beschreibung

### Technisches Gebiet

Die Erfindung betrifft eine offene Gasturbine mit Abwärmerückgewinn sowie Zwischenkühlung während der Verdichtung, wobei die Gasturbine im wesentlichen einen axialdurchströmten, zweiteiligen Verdichter mit dazwischengeschaltenen Kühler, mindestens eine Brennkammer, mindestens eine Turbine und einen Rekuperator aufweist, in welchem die Verdichterluft auf die Einlasstemperatur in die Brennkammer erhitzt wird. Die Erfindung betrifft auch ein Betriebsverfahren für eine solche Gasturbine.

### Stand der Technik

Derartige Gasturbinen sind hinlänglich bekannt. Die Abwärmerückgewinnung und die Zwischenkühlung während der Verdichtung gelten dabei als Prozessverbesserungen, die zum Zwecke einer Wirkungsgradsteigerung und/oder zur Leistungserhöhung eingesetzt werden. Die Zwischenkühlung hat eine Verflachung der Wirkungsgradkurven zur Folge und ist insbesondere interessant bei Anlagen mit hohen Druckverhältnissen. Axialdurchströmte Verdichter für hohe Druckverhältnisse werden zur Zwischenkühlung des Arbeitmittels deshalb in der Regel mehrgehäusig ausgeführt. Das Arbeitmittel - hier atmosphärisch angesaugte Verbrennungsluft - wird nach einer Niederdruckverdichtung in einem ausserhalb der Vedichtergehäuse angeordneten Zwischenkühler heruntergekühlt, bevor sie in einem weiteren Verdichterteil auf den Enddruck verdichtet wird. Selbstverständlich ist auch mehrfache Zwischenkühlung möglich.

Bei radialdurchströmten mehrstufigen Verdichtern ist es ferner bekannt, zur Zwischenkühlung eine verdampfende Flüssigkeit in den Gasstrom einzuspritzen. Die US-A-2,786,626 zeigt beispielsweise einen solchen Zentrifugalverdichter, bei dem eine verdampfbare Flüssigkeit sowohl in den Verdichtereinlass als auch in den Querkanal zwischen den Lauf- und Leiträdern der einzelnen Stufen eingedüst wird. Da die Einspritzung jedoch in einem Gebiet mit niedriger Strömungsgeschwindigkeit erfolgt, ist es fraglich, ob mehr als eine begrenzte Verdampfung der Flüssigkeit und damit Kühlung des geförderten Arbeitsmittels mit dieser Methode zu erzielen ist. Aus diesem Grund sind auch zwischen den Stufen jeweils Entwässerungen vorgesehen. Darüberhinaus ist sogar die Möglichkeit angegeben, mehr Flüssigkeit einzuspritzen, als überhaupt verdampft werden kann. Diese unverdampfte Flüssigkeit soll am Vedichteraustritt den komprimierten Gasen beigemischt werden.

### Darstellung der Erfindung

Der Erfindung liegt die Aufgabe zugrunde, bei einer Gasturbine der eingangs genannten Art durch weitere Zwischenkühlung die Verdichtungsendtemperatur resp. die Verdichtungsarbeit zu erniedrigen.

Erfindungsgemäss wird dies dadurch erreicht,
- dass zumindest der erste Verdichterteil mit einer Mehrzahl von Wassereinspritzungen versehen ist,
- dass der Kühler Mittel zur Wasser-Rekuperation aufweist,
- und dass die Mittel zur Wasser-Rekuperation über eine Förderpumpe mit den Wassereinspritzungen verbunden sind.

Die Vorteile der Erfindung sind unter anderem in einer beträchtlichen Wirkungsgradsteigerung der Anlage zu sehen. Denn neben der Reduzierung der Verdichterarbeit hat die niedrige Verdichtungsendtemperatur zur Folge, dass die Turbineneintrittstemperatur gesteigert werden kann. Dies, weil mit der "kalten" verdichteten Verbrennungsluft ein hervorragendes Kühlmittel für die heissen Turbinenteile zur Verfügung steht. Darüberhinaus müssen keine hochwertigen Werkstoffe für den Rotor und die Beschaufelung eingesetzt werden.

Es ist besonders zweckmässig, wenn die Wassereinspritzungen im Verdichter jeweils in der Ebene der Leitbeschaufelung angeordnet sind und wenn sie sich über der ganzen Höhe des durchströmten Verdichterkanals erstrecken. Eine günstige Einspritzung in den durchströmten Verdichterkanal kann durch hohle Leitschaufeln oder über gitterförmig angeordnete Einspritzdüsen erfolgen. Mit dieser Massnahme kann auf zusätzliche, Druckverluste aufweisende Komponenten verzichtet werden und es bietet sich eine strömungsgerechte Eispritzmöglichkeit an.

Ein Verfahren zum Betreiben der Anlage zeichnet sich dadurch aus, dass über die Mehrzahl von Wassereinspritzungen jeweils soviel Wasser zugegeben wird, dass das entstehende Dampf-Luftgemisch während der Verdichtung die Wasser-Sättigungslinie nicht unterschreitet, und dass im Endkühler die zwischenverdichtete Luft soweit hinuntergekühlt wird, dass zumindest annähernd alles eingespritzte Wasser auskondensiert und nach dessen Reinigung wiederum den Wassereinspritzungen zugeführt wird.

Mit diesem Verfahren wird nahezu kein Wasser verbraucht. Ausserdem bietet sich die Möglichkeit an, dem einzuspritzenden Wasser ein Vedichterreinigungsmittel zuzugeben, um den Verdichter während des Betriebes kontinuierlich reinigen zu können.

### Kurze Beschreibung der Zeichnung

In der Zeichnung ist ein Ausführungsbeispiel der Erfindung anhand einer zweiwelligen axialdurchströmten Gasturbine dargestellt.

Es zeigen:
- Fig. 1: ein Schaltschema einer Gasturbine mit Zwischenkühlung, Zwischenerhitzung und Wärmerekuperation;
- Fig. 2: ein Temperatur-Entropiediagramm des in Fig. 1 gezeigten Prozesses.

Es sind nur die für das Verständnis der Erfindung wesentlichen Elemente gezeigt. Die Strömungsrichtung der Arbeitsmittel ist mit Pfeilen bezeichnet.

### Weg zur Ausführung der Erfindung

Bei der gezeigten Anlage handelt es sich um eine Verbundschaltung, bei welcher ein Niederdruckverdichter 1A und ein Hochdruckverdichter 1B sowie eine Verdichterturbine 2B und eine Nutzleistungsturbine 2A zwar in Serie geschaltet, jedoch auf getrennten Wellen 3A,3B angeordnet sind. Die Kraftabnahme erfolgt verdichterseitig an der Niederdruckwelle 3A, wo ein Generator 4 angeordnet ist. die Hochdruckwelle 3B ist im Beispielsfall als Hohlwelle konzipiert.

Die zwei axialdurchströmten Verdichter in Serie sind mit einer ersten Zwischenkühlung versehen. Hierzu ist ein in der Regel wassergekühlter Kühler 5 ausserhalb und zwischen den beiden Verdichtergehäusen angeordnet.

Vom Austritt des Hochdruckverdichters 1B durchströmt die endverdichtete Luft im Gegenstrom einen Rekuperator 6, welcher von den Rauchgasen der Nutzleistungsturbine 2A beaufschlagt ist. In diesem Apparat wird die Verbrennungsluft auf die am Eingang der Hochdruckbrennkammer 7 vorgesehene Temperatur aufgewärmt. In dieser Brennkammer erfolgt durch Zugabe eines Brennstoffs 17 eine Erhitzung des Arbeitsmittels auf die vorgesehene Turbinen-Eintrittstempertur.

Die beiden Turbinen in Serie sind mit einer Zwischenerhitzung versehen. Hierzu ist zwischen Austritt der Verdichterturbine 2B und Eintritt der Nutzleistungsturbine 2A eine Niederdruckbrennkammer 8 mit einer weiteren Brennstoffzufuhr 18 vorgesehen. Es versteht sich, dass es sich bei den schematisch dargestellten Einzelbrennkammern 7, 8 auch um Ringbrennkammern handeln kann.

Soweit sind offene Gasturbinen mit Prozessverbesserungen bekannt. Gemäss der Erfindung ist nunmehr eine weitere Zwischenkühlung des Arbeitsmittels im ersten Verdichterteil, d.h. im Niederdruckverdichter 1A vorgesehen.
Bei dieser weiteren Zwischenkühlung handelt es sich um eine innere Zwischenkühlung, die durch Einspritzung von zu verdampfendem Wasser in den durchströmten Verdichterkanal realisiert wird.

Hierzu verläuft längs des Niederdruckverdichters, von dessen Beschaufelung nur die Lauschaufeln 9 dargestellt sind, eine Wasserleitung 10, von der zu jeder Verdichterstufe eine Zuströmleitung 11 abzweigt. Die eigentliche Wassereinspritzung erfolgt im Kanalinnern über Einspritzdüsen 12, welche gitterförmig im Kanal auf geeignete Weise angeordnet sind. Diese Gitter befinden sich jeweils in der Ebene der nicht dargestellten Leitschaufeln. Die Einspritzdüsen sind über der Kanalhöhe gleichmässig verteilt. Die eingedüste Menge ist so bemessen, dass alles zerstäubte Wasser unmittelbar verdampft. Im Verlauf der Verdichtung soll die Einspritzung so dosiert sein, dass in keinem Fall die Sättingungslinie von Wasserdampf unterschritten wird.

Statt eines separaten Gitters können sich die Einspritzdüsen auch an oder in den Leitschaufeln selbst befinden und beispielsweise über Hohlräume in den Leitschaufeln angespeist werden, wobei diese Hohlräume mit der zugehörigen Zuströmleitung 11 verbunden sind.

Das Gemisch aus teilverdichteter Verbrennungsluft und Wasserdampf wird vom Austritt des Niedruckverdichters in den Kühler 5 gefördert. Darin wird es so weit hinuntergekühlt, dass der Wasserdampf vollständig auskondensiert. In den Hochdruckverdichter gelangt somit Luft, die grundsätzlich trockener sein kann als die atmospärisch am Eintritt des Niederdruckverdichters angesaugte Frischluft.

Das im Kühler 5 anfallende Kondensat wird in einem Sammelgefäss 13 aufgefangen. Daraus wird es mittels einer Förderpumpe 14 über eine Aufbereitungsanlage 15, in der das Wasser insbesondere gereinigt wird, wiederum in die Wasserleitung 10 und zu den Einspritzdüsen gepumpt.

Das folgende Zahlenbeipiel soll ein Mass für den zu erzielenden Wärmerückgewinn angeben. Zugrundegelegt sei ein Verdichter mit einem Enddruck von 30 bar und einer angesaugten Frischluftmenge von 370 Kg/sec. Der vielstufige Niederdruckverdichter komprimiert die Luft auf 15 bar. Er ist in mehreren Stufen mit einer Wassereinspritzung ausgerüstet. Mit einer gesamten Einspritzmenge von 28 Kg/sec, welche auf die mehreren Stufen entsprechend aufgeteilt ist, wird eine Austrittstemperatur aus dem Niederdruckverdichter von lediglich ca. 150°C erreicht. Im Zwischenkühler 5 wird das Gemisch auf ca. 50°C heruntergekühlt, auf eine Temperatur demnach, die beim vorherrschenden Druck zur vollständigen Kondensation des eingespritzten Wasserdampfes führt. Die Endverdichtung im Hochdruckverdichter 1B erhöht die Temperatur der Verbrennungsluft an dessen Austritt auf ca. 120°C. Legt man darüberhinaus eine hochbelastete Turbine mit den heutigen Eintrittstemperaturen zugrunde, so weisen die Turbinenabgase beim Eintritt in den Rekuperator 6 eine Temperatur von ca. 600°C auf. Diese heissen Abgase tauschen ihre Wärme bis zur Rekuperator-Austrittstemperatur von 160°C hinunter auf die eingangsseitig nur 120°C aufweisende Verbrennungsluft.

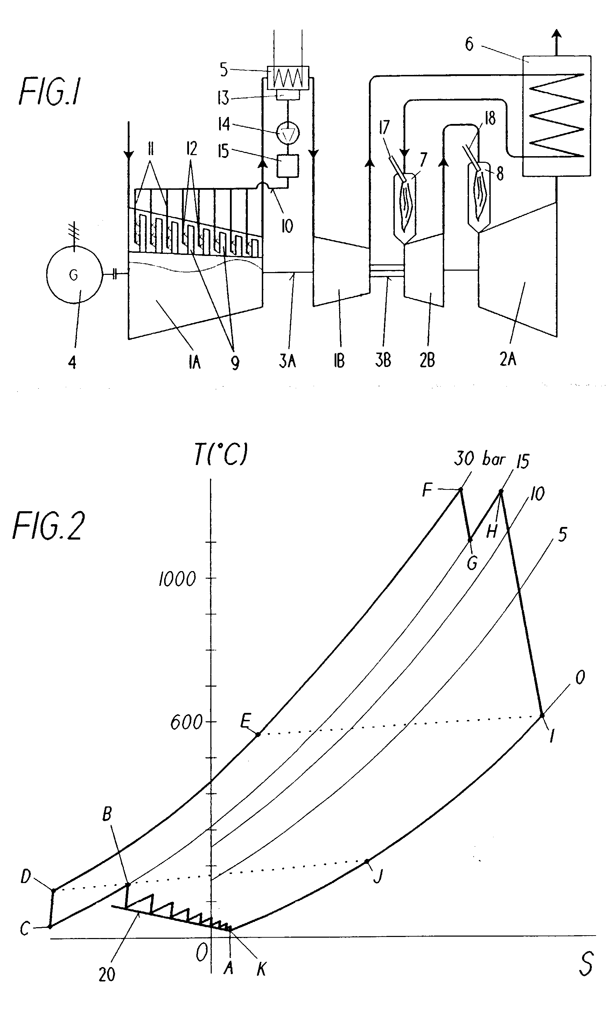

Im selbsterklärenden Temperatur (Ordinate) - Entropie (Abzisse) - Diagramm der Fig. 2 ist der soeben geschilderte Prozess erkennbar. Er wird nachstehend nur kurz erläutert:

Die bei 15°C angesaugte Frischluft wird von A-B im Niederdruckverdichter infolge der inneren Stufenkühlung sägezahnförmig komprimiert. Von B-C erfolgt die Zwischenkühlung mit Wasserrekuperation. Von C-D wird im Hochdruckverdichter auf Enddruck komprimiert. Von D-E wird die Verbrennungsluft mittels Rekuperation aufgeheizt. Von E-F erfolgt die Wärmezufuhr über die Hochdruckverbrennung. Von F-G wird in der Verdichterturbine entspannt. Das Druckniveau in G ist dabei so gewählt, dass im Fall einer Zweiwellenanlage der Hochdruckverdichter und die Verdichterturbine im Gleichgewicht sind. Von G-H erfolgt in der Niederdruckbrennkammer die Zwischenerhitzung. Von H-I werden die Rauchgase unter Leistungsabgabe an den Generator in der Mutzturbine entspannt. Von I-J erfolgt im Rekuperator die Wärmeabgabe an die Verbennungsluft. Von J-K wird die Restwärme der Abgase an die Atmosphäre abgegeben.

Ersichtlich ist, dass bei der stufenweisen Zwischenkühlung anlässlich der Niederdruckverdichtung die Sättigigungslinie 20 nicht unterschritten wird.

Es ist demnach erkennbar, dass mit der neuen Massnahme ein Anlagen-Wirkungsgrad erzielt werden kann, wie er sonst nur mit einer ungleich aufwendigeren Kombianlage zu erreichen ist.

Selbstverständlich ist die Erfindung nicht auf die gezeigte und beschriebene Anlage beschränkt. In Abweichung zur dargestellten Zweiwellenanlage könnte es sich genau so gut um eine einwellige Anlage handeln. In diesem Fall hätte man noch mehr Freiheiten bezüglich der Unterteilung der Verdichtereinheit in gekühlten und ungekühlten Teil. Grundsätzlich könnte sogar ganz auf den zweiten Verdichterteil verzichtet werden. Bei einer derartigen direkten Hintereinanderschaltung von entwässertem Kühler und Rekuperator könnte bei gasgefeuerten Anlagen der Energieinhalt der Abgase im Rekuperator maximal ausgenutzt werden und damit auf einen weiteren "bottoming cycle" zur Brennstoffausnutzung verzichtet werden. Auch bei der Wassereinspritzung sind Varianten vorstellbar, bei welchen das Wasser durch einen hohlen Rotor geleitet wird und über radiale Bohrungen fliehkraftbedingt in den durchströmten Verdichterkanal gelangt.

### Bezugszeichenliste

- 1A: Niederdruckverdichter
- 1B: Hochdruckverdichter
- 2A: Nutzleistungturbine
- 2B: Verdichterturbine
- 3A: Niederdruckwelle
- 3B: Hochdruckwelle
- 4: Generator
- 5: Zwischenkühler
- 6: Rekuperator
- 7: Hochdruckbrennkammer
- 8: Niederdruckbrennkammer
- 9: Laufschaufel von 1A
- 10: Wasserleitung
- 11: Zufuhrleitung
- 12: Wassereinspritzung, Einspritzdüse
- 13: Sammelgefäss
- 14: Förderpumpe
- 15: Aufbereitungsanlage
- 17: Brennstoff
- 18: Brennstoff
- 20: Sättigigungslinie

## Patentansprüche

1. Offene Gasturbine mit Abwärmerückgewinn sowie Zwischenkühlung während der Verdichtung, wobei die Gasturbine im wesentlichen einen axialdurchströmten, zweiteiligen Verdichter (1A, 1B) mit dazwischengeschaltenen Kühler (5), mindestens eine Brennkammer (7, 8), mindestens eine Turbine (2A, 2B) und einen Rekuperator (6) aufweist, in welchem die Verdichterluft auf die Einlasstemperatur in die Brennkammer (7) erhitzt wird,
dadurch gekennzeichnet,
- dass zumindest der erste Verdichterteil (1A) mit einer Mehrzahl von Wassereinspritzungen (12) versehen ist,
- dass der Kühler (5) Mittel zur Wasser-Rekuperation (13) aufweist,
- und dass die Mittel zur Wasser-Rekuperation über eine Förderpumpe (14) mit den Wassereinspritzungen (12) verbunden sind.

2. Gasturbine nach Anspruch 1, dadurch gekennzeichnet, dass die Wassereinspritzungen (12) im Verdichter jeweils in der Ebene der Leitbeschaufelung angeordnet sind.

3. Gasturbine nach Anspruch 2, dadurch gekennzeichnet, dass die Wassereinspritzungen (12) über der ganzen Höhe des durchströmten Verdichterkanals angeordnet sind.

4. Gasturbine nach Anspruch 2, dadurch gekennzeichnet, dass die Wassereinspritzung (12) in den durchströmten Verdichterkanal durch hohle Leitschaufeln erfolgt.

5. Gasturbine nach Anspruch 2, dadurch gekennzeichnet, dass die Wassereinspritzung in den durchströmten Verdichterkanal über gitterförmig angeordnete Einspritzdüsen erfolgt.

6. Verfahren zum Betreiben der Gasturbine nach Anspruch 1, dadurch gekennzeichnet, dass über die Mehrzahl von Wassereinspritzungen (12) jeweils soviel Wasser zugegeben wird, dass das entstehende Dampf-Luftgemisch während der Verdichtung die Wasser-Sättingungslinie nicht unterschreitet, und dass im Kühler (5) die zwischenverdichtete Luft soweit hinuntergekühlt wird, dass zumindest annähernd alles eingespritzte Wasser auskondensiert und nach dessen Reinigung wiederum den Wassereinspritzungen zugeführt wird.
